# EUROPÄISCHE PATENTSCHRIFT

(11) **EP 0 780 583 B1**
(45) Veröffentlichungstag und Bekanntmachung des Hinweises auf die Patenterteilung: **26.01.2000**
(21) Anmeldenummer: 96119268.9
(22) Anmeldetag: 02.12.1996
(51) Int. Cl.: F16B 7/04

(54) **Kupplung für die Verbindung von stabförmigen Teilen**
Coupling for connecting elongated elements
Raccord pour la connexion d'éléments de forme allongée

(30) Priorität: 19.12.1995 DE 19547382
(43) Veröffentlichungstag der Anmeldung: 25.06.1997
(73) Patentinhaber: MAN Technologie AG, 86153 Augsburg (DE)
(72) Erfinder: Berlin, Hans-Joachim, Dipl.-Ing., 47239 Duisburg (DE); Gruss, Jörg, Dr.-Ing., 47906 Kempen (DE)

(56) Entgegenhaltungen:
- EP-A- 0 724 083
- US-A- 5 090 837

## Beschreibung

Die Erfindung betrifft eine durch zwei ineinandersteckbare Verbindungselemente gebildete Kupplung für die Verbindung von stabförmigen Teilen, wobei das eine Verbindungselement mit einem im Querschnitt zylinderförmigen Dorn und das andere Verbindungselement mit einer zylinderförmigen Ausnehmung versehen ist. Eine derartige Verbindung bei welcher beide Teile ein oder zwei konische Segmente aufweisen, ist in der US-A-5 090 837 beschrieben.

Derartige Kupplungen dienen zur Übertragung eines Biegemomentes zusätzlich zu einer Normal- und Querkraft in zwei ineinandergesteckten stabförmigen Teilen, die sich einerseits auch im stark verschmutzten Zustand schnell und einfach kuppeln und auch wieder lösen läßt, und die andererseits im gekuppelten Zustand eine sichere formschlüssige Übertragung des Momentes und der Kräfte gewährleistet.

Diese Kupplungen finden in vielen technischen Bereichen Anwendung. Bei Pioniergeräten, beispielsweise Brückenkonstruktionen, besteht die Forderung, lange tragfähige Bauteile in transportfähige tragbare Teilstücke zu zerlegen. Bei bekannten Kupplungen ist zwischen dem Dorn und der Ausnehmung der beiden Verbindungselemente ein verhältnismäßig großes Spiel vorgesehen, um die beiden Verbindungselemente, auch unter erschwerten Bedingungen, wie starke Verschmutzung, Schrägstellung der beiden Verbindungelemente zueinander, schnell und problemlos ineinanderstecken und wieder lösen zu können.

Daß die bei Verkehrslast hoch beanspruchten Kupplungen Normalkräfte, Querkräfte, Torsionsmomente und Biegemomente sicher übertragen müssen, steht im Widerspruch zu dem vorstehend erwähnten verhältnismäßig großen Spiel zwischen den Kontaktstellen. Denn besonders bei Biegedruckstäben bewirkt das Spiel in Querrichtung eine erhöhte geometrische Imperfektion, die ein Ausknicken erheblich begünstigen kann.

Bei den bekannten Kupplungen werden daher in der Regel Steckbolzen verwendet, die jedoch erhebliche Nachteile aufweisen, und zwar
- wird der Grundquerschnitt so geschwächt, daß nur ein Bruchteil der möglichen Belastung des ungeschwächten Querschnitts übertragen werden kann,
- entsteht durch einen entsprechend vergrößerten Querschnitt zusätzliches Bauvolumen und ein erhöhtes Gewicht,
- weisen die Verbindungsstellen ein so großes Spiel auf, daß sich größere Imperfektionen des Tragsystems und damit eine verminderte Tragfähigkeit ergeben,
- ergibt sich eine ungünstige Spannungsverteilung durch örtliche Einleitung von größeren Einzellasten,
- ist ein große Anzahl zusätzlicher Einzelteile erforderlich.

Der Erfindung liegt die Aufgabe zugrunde, die vorgenannten Nachteile zu vermeiden und eine Kupplung zu schaffen, die durch eine spezielle konstruktive Ausbildung in der Lage ist, Biegemomente in Verbindung mit anderen Belastungen sicher zu übertragen und trotzdem ein leichtes Zusammenführen und wieder Lösen der beiden Verbindungselemente - auch unter erschwerten Bedingungen - ermöglicht.

Die Lösung der gestellten Aufgabe besteht bei einer Kupplung der eingangs genannten Art darin,
- daß bei dem einen Verbindungselement der Durchmesser des vorderen Bereichs des zylinderförmigen Dorns wesentlich kleiner ist als der Durchmesser der zylinderförmigen Ausnehmung des anderen Verbindungselements, während der Durchmesser des hinteren Bereichs des zylinderförmigen Dorns etwa dem Durchmesser der zylinderförmigen Ausnehmung entspricht,
- daß zwischen dem vorderen Bereich und dem hinteren Bereich des Dorns ein konusartiges Zwischenstück vorgesehen ist,
- daß das vordere Ende des Dorns konusartig verjüngt ausgebildet ist,
- daß in der zylinderförmigen Ausnehmung ein Ring vorgesehen ist, dessen Außendurchmesser etwa dem Durchmesser der zylinderförmigen Ausnehmung und dessen Innendurchmesser etwa dem Durchmesser des vorderen Bereichs des zylinderförmigen Dorns entspricht,
- daß der Abstand des Ringes von der Vorderkante des mit der Ausnehmung versehenen Verbindungselementes so gewählt ist, daß der Ring nach Beendigung des Kupplungsvorgangs den vorderen Bereich des zylinderförmigen Dorns des anderen Verbindungselementes umschließt.

Durch die bei der erfindungsgemäßen Kupplung möglichen Maßtoleranzen und Einbaubedingungen an den Verbindungsstellen können auftretende Biegemomente sicher von dem einen Verbindungselement auf das andere Verbindungselement übertragen werden.

Beim Zusammenführen der beiden Verbindungselemente ist zunächst ein ausreichend großes Spiel vorhanden, so daß das Einschieben des Dorns des einen in die Ausnehmung des anderen Verbindungselementes problemlos mit nur geringer Kraftaufwendung durchgeführt werden kann. Beim weiteren Einschieben des Dorns in die Ausnehmung bis zum Berühren der Stirnflächen der beiden Verbindungselemente sorgen die konischen Bereiche des Dorns und der in die Ausnehmung eingesetzte Ring für eine selbsttätige Zentrierung der beiden Verbindungselemente.

In Ausgestaltung der Erfindung ist der Ring an seiner inneren Umfangsfläche - im Querschnitt gesehen - stufenförmig ausgebildet, wobei die kleinere Stufe zum vorderen Ende des Verbindungselementes gerichtet ist. Hierdurch wird das problemlose Zusammenführen der beiden Verbindungselemente noch weiter erleichtert.

Eine entsprechende Erleichterung beim Zusammenführen der beiden Verbindungselemente wird dadurch erreicht, daß der Ring an seiner inneren Umfangsfläche - im Querschnitt gesehen - ballig oder, nach einem anderen Merkmal der Erfindung, kegelförmig ausgebildet ist.

In weiterer Ausgestaltung der erfindungsgemäßen Kupplung sind das konusartige Zwischenstück des Dorns und/oder dessen konusartig verjüngtes vorderes Ende durch mit dem Dorn verbundene Hülsen gebildet. Hierdurch ist es möglich, das konusartige Zwischenstück des Dorns und/oder dessen konusartig verjüngtes vorderes Ende beispielsweise als Gußteil herzustellen.

Bei einer besonders vorteilhaften Ausführungsform der erfindungsgemäßen Kupplung sind das konusartige Zwischenstück des Dorns und/oder dessen konusartig verjüngtes vorderes Ende mit axial verlaufenden Einfräsungen versehen. Diese Einfräsungen dienen dazu, an den Kontaktflächen der beiden Verbindungselemente anhaftenden Schmutz abzuführen. Größere Schmutzmengen lassen sich durch eine Drehung der beiden Verbindungselemente gegeneinander an den scharfen Kanten der Einfräsungen abstreifen.

Zweckmäßigerweise ist auch die Stirnfläche des mit dem Dorn versehenen Verbindungselementes mit axial verlaufenden Einfräsungen versehen, damit auch an den Stirnflächen etwa vorhandener Schmutz durch eine leichte Drehung abgestreift werden kann.

Die erfindungsgemäße Kupplung kann dadurch besonders leicht ausgeführt werden, daß das mit dem Dorn versehene Verbindungselement als Rohr ausgebildet ist. Das mit dem Dorn versehene, aus einem Rohr gebildete Verbindungselement sowie das mit der Ausnehmung versehene Verbindungselement müssen hinsichtlich der Wandstärke lediglich so bemessen und ausgeführt sein, daß die Querschnitte die erforderlichen Widerstandsmomente für die Übertragung des Biegemomentes aufweisen. Bei einer so ausgestalteten Kupplung wird der Materialquerschnitt optimal ausgenutzt, so daß hinsichtlich der Tragfähigkeit ein extremer Leichtbau möglich ist.

Um eine möglichst einfache und schnelle Arretierung der beiden Verbindungselemente herbeiführen zu können, weisen nach einem weiteren Merkmal der Erfindung beide Verbindungselemente eine radial verlaufende Bohrung auf, die so angeordnet sind, daß sie nach Beendigung des Kupplungsvorgangs miteinander fluchten.

Bei der erfindungsgemäßen Kupplung erfolgt die Übertragung des Biegemoments von einem Verbindungselement auf das andere an den eng tolerierten Kontaktflächen - die durch den hinteren Bereichs des Dorns und der Ausnehmung einerseits sowie durch den vorderen Bereich des Dorns und dem in die Ausnehmung eingesetzten Ring andererseits gebildet sind - durch Flächenpressung der Druckkräfte aus dem entstehenden Kräftepaar. Da sich diese Druckkräfte über den Umfang verteilen, weisen die Kontaktflächen auch bei nur geringer Ausdehnung in Kupplungslängsrichtung eine sehr kleine Flächenpressung auf.

Bei Beaufschlagung des Biegemomentes stützen sich die Wandungen des mit dem Dorn versehenen, aus einem Rohr gebildeten Verbindungselementes und des mit der Ausnehmung versehenen Verbindungselementes gegenseitig ab und verhindern die beim freien Querschnitt entstehende Ovalisierung.

Das mit dem Dorn versehene Verbindungselement kann, ebenso wie das mit der Ausnehmung versehene Verbindungselement, als Rohr ausgebildet sein.

Die Erfindung ist anhand der Zeichnung, in der Ausführungsbeispiele der erfindungsgemäßen Kupplung dargestellt sind, näher erläutert. Es zeigen:
- Fig. 1a und 1b: die Enden der beiden Verbindungselemente einer Kupplung vor Beginn des Kupplungsvorgangs in einer Seitenansicht, wobei die Achsen der beiden Verbindungselemente parallel zueinander verlaufen;
- Fig. 2: die in Fig. 1 dargestellten Enden der Verbindungselemente während des Kupplungsvorgangs;
- Fig. 3: die in Fig. 1 dargestellten Enden der Verbindungselemente nach Beendigung des Kupplungsvorgangs;
- Fig. 4: die Enden der beiden Verbindungselemente einer Kupplung während einer ersten Phase des Kupplungsvorgangs, wobei die Achsen der beiden Verbindungselemente einen Winkel miteinander bilden;
- Fig. 5: die in Fig. 4 dargestellten Enden der Verbindungselemente während einer zweiten Phase des Kupplungsvorgangs;
- Fig. 6 bis 8: Ausschnitte aus dem mit einer Ausnehmung versehenen Verbindungselement, die besondere Ausgestaltungen des in der Ausnehmung vorgesehenen Ringes zeigen;
- Fig. 9: den Dorn eines Verbindungselementes einer Kupplung in größerem Maßstab, in einem Halbschnitt;
- Fig. 10: ein als Anschlußelement für eine aus Einzelteilen zusammensetzbare Brücke ausgebildetes Verbindungselement einer Kupplung.

Die erfindungsgemäße Kupplung besteht aus zwei Verbindungselementen 1 und 2. Das Verbindungselement 1 weist einen Dorn 3 und das Verbindungselement 2 weist eine Ausnehmung 4 auf.

Der Dorn 3 des Verbindungselementes 1 ist abgestuft; er weist einen vorderen Bereich V3 mit einem Durchmesser DV3 und einen hinteren Bereich H3 mit einem Durchmesser DH3 auf. Die zylinderförmige Ausnehmung 4 des Verbindungselementes 2 hat einen Durchmesser D4. Der Durchmesser DV3 ist wesentlich kleiner als der Durchmesser D4, während der Durchmesser DH3 etwa dem Durchmesser D4 entspricht.

Zwischen dem vorderen Bereich V3 und dem hinteren Bereich H3 des Dorns 3 ist ein konusartiges Zwischenstück Z3 vorgesehen. Das vordere Ende V3' des Dorns 3 ist konusartig verjüngt.

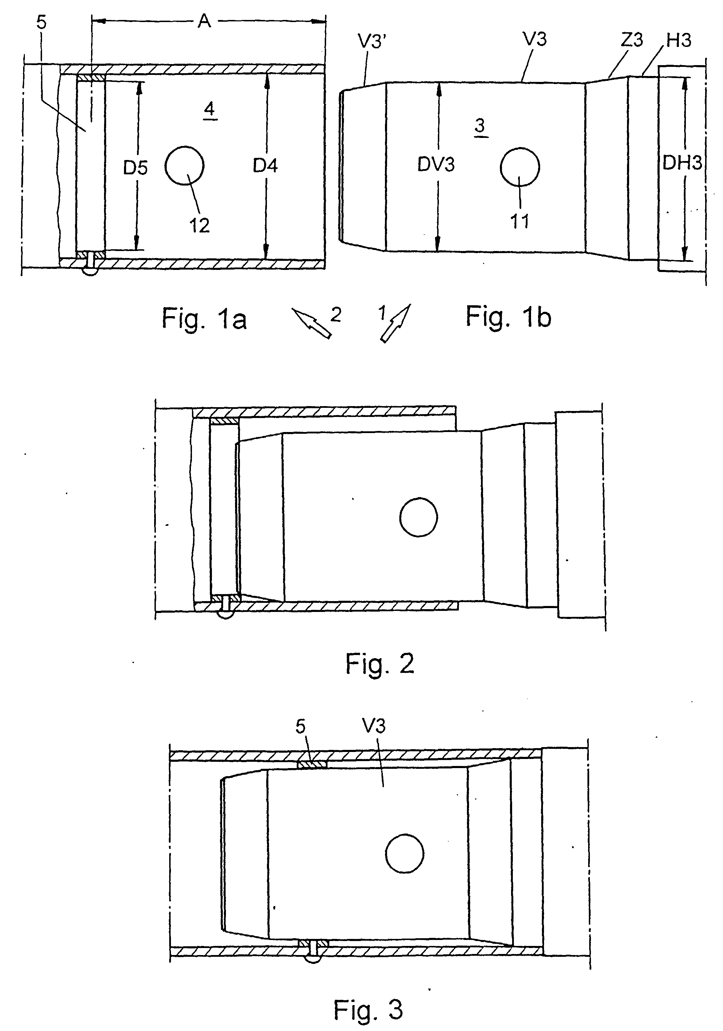

In der zylinderförmigen Ausnehmung 4 des Verbindungselementes 2 ist ein Ring 5 vorgesehen, dessen Außendurchmesser etwa dem Durchmesser D4 der zylinderförmigen Ausnehmung 4 und dessen Innendurchmesser D5 etwa dem Durchmesser DV3 des vorderen Bereichs V3 des zylinderförmigen Dorns 3 entspricht. Der Abstand A des Ringes 5 von der Vorderkante des Verbindungselementes 2 ist so gewählt, daß der Ring 5 - wie Fig. 3 zeigt - nach Beendigung des Kupplungsvorgangs den vorderen Bereich V3 des Dorns 3 umschließt.

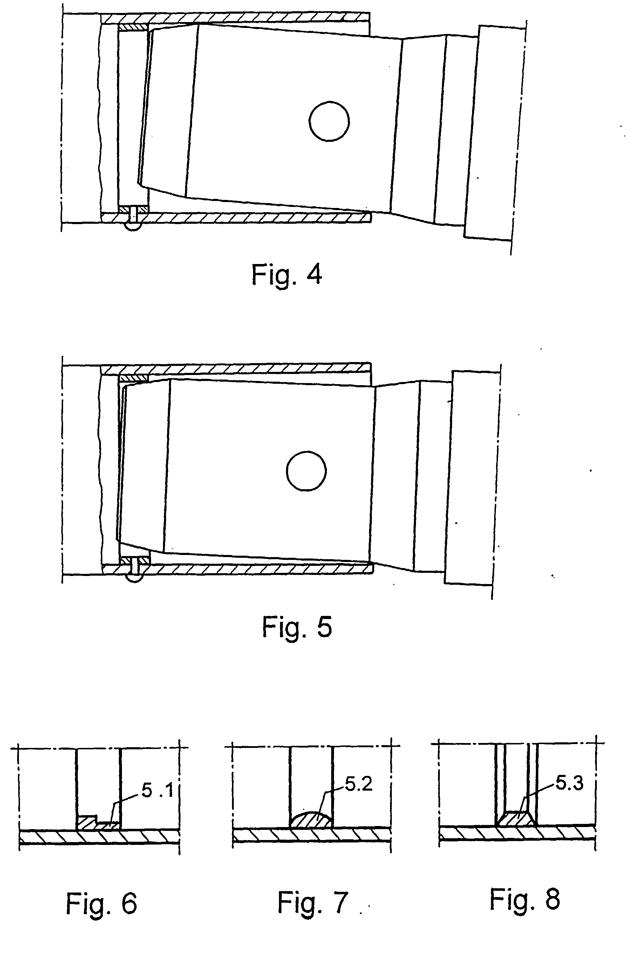

Es kann auch ein Ring 5.1 verwendet werden, der an seiner inneren Umfangsfläche - im Querschnitt gesehen - stufenförmig ausgebildet ist (Fig. 6). Es kann aber auch ein ballig ausgebildeter Ring 5.2 (Fig. 7) oder ein kegelförmig ausgebildeter Ring 5.3 (Fig. 8) verwendet werden.

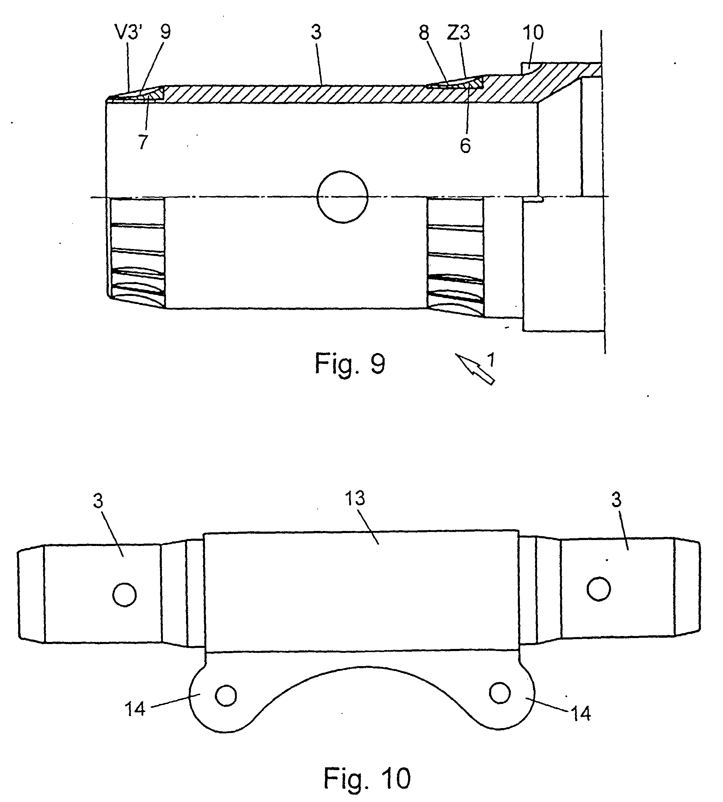

Wie Fig. 9 zeigt, können das konusartige Zwischenstück Z3 des Dorns 3 und dessen vorderes Ende V3' durch Hülsen 6 und 7 gebildet sein. Die Hülsen 6 und 7 sind auf den Dorn 3 aufgeschrumpft oder anderweitig befestigt. Das konusartige Zwischenstück Z3 des Dorns 3 und dessen vorderes Ende V3' - die im dargestellten Ausführungsbeispiel durch die Hülsen 6 und 7 gebildet sind - können ferner mit axial verlaufenden Einfräsungen 8 und 9 versehen sein. Weitere Einfräsungen 10 weist die Stirnfläche des Verbindungselementes 1 auf.

Die Arretierung der beiden Verbindungselemente 1 und 2 nach Beendigung des Kupplungsvorgangs erfolgt mittels nicht dargestellter Bolzen, die durch in den Verbindungselementen 1 und vorgesehene radial verlaufende Bohrungen 11 und 12 eingesteckt werden.

Das in Fig. 10 dargestellte Ausführungsbeispiel zeigt ein Verbindungselement, das als Anschlußelement 13 für eine aus Einzelteilen zusammensetzbare Brücke ausgebildet ist. Dieses Anschlußelement 13 weist an seinen beiden Seiten einen Dorn 3 auf und ist mit Flanschen 13 für den Anschluß - nicht dargestellter - Fachwerkstäbe - versehen.

Bei der Durchführung des Kupplungsvorgangs wird der an dem Verbindungselement 1 vorgesehene Dorn 3 in die Ausnehmung 4 des Verbindungselementes 2 eingeführt (Fig. 1 und 5). Dabei kann entweder - wenn die Achsen der beiden Verbindungselemente 1 und 2 parallel zueinander verlaufen - der vordere Bereich V3 des Dorn 3 zunächst über seine Länge unten auf der Innenwandung der Ausnehmung 4 aufliegen (Fig. 2) oder - wenn die Achsen der beiden Verbindungselemente 1 und 2 einen Winkel miteinander bilden - der Dorn 3 oben und unten an der Innenwandung der Ausnehmung 4 anliegen (Fig. 4 und 5). In jedem Falle gleitet das konusartig ausgebildete vordere Ende V3' des Dorns 3 über den in der Ausnehmung 4 des Verbindungselementes 2 vorgesehenen Ring 5 hinweg, so daß der vordere Bereich V3 des Dorns 3 in den Ring 5 eintritt. Bei weiterem Vorschieben des Verbindungselementes 1 gegen das Verbindungselement 2 gleitet der Dorn 3 mit seinem konusartigen Zwischenstück Z3 - ohne das ein größerer Widerstand zu überwinden ist - über die Vorderkante der Ausnehmung 4 (Fig. 2 und 5). Wenn die Stirnfläche des Verbindungselementes 1 gegen die Stirnfläche des Verbindungselementes 2 stößt ist der Kupplungsvorgang beendet (Fig. 3).

Über den gesamten Weg des Dorns 3 des Verbindungselementes 1 durch die Ausnehmung 4 des Verbindungselementes 2 ist es infolge der Gestaltung der beiden Verbindungselemente 1 und 2 der Kupplung nicht möglich, daß sich Kanten in Längsrichtung verhaken. Durch die konusartige Ausbildung des vorderen Endes V3' und des Zwischenstücks Z3 des Dorns 3 zentrieren sich die beiden Verbindungselemente 1 und 2 selbsttätig. Zum Zusammenschieben bis zur Berührung der Stirnflächen der beiden Verbindungselemente 1 und 2 ist ein kurzer begrenzter Kraftstoß erforderlich, weil der Durchmesser DH3 des hinteren Bereichs H3 des Dorns 3 und der Durchmesser D4 der Ausnehmung 4 einerseits sowie der Durchmesser DV3 des vorderen Bereichs V3 des Dorns 3 und der Innendurchmesser D5 der in der Ausnehmung 4 andererseits mit einer verhältnismäßig engen Passung versehen sind. Je nach Anordnung des Ringes 5 in der Ausnehmung 4 erfolgt das Aufeinanderschieben der durch den hinteren Bereich H3 des Dorns 3 und der Ausnehmung 4 einerseits sowie den vorderen Bereichs V3 des Dorns und dem Ring 5 gebildeten Kontaktflächen gleichzeitig oder hintereinander.

Zur Arretierung der beiden Verbindungselemente 1 und 2 wird durch die Bohrungen 11 und 12, die nach Beendigung des Kupplungsvorgangs miteinander fluchten, ein - nicht dargestellter - Bolzen gesteckt.

## Patentansprüche

1. Durch zwei ineinandersteckbare Verbindungselemente (1,2) gebildete Kupplung für die Verbindung von stabförmigen Teilen, wobei das eine Verbindungselement mit einem im Querschnitt zylinderförmigen Dorn (3) und das andere Verbindungselement mit einer zylinderförmigen Ausnehmung (4) versehen ist,
**dadurch gekennzeichnet,**
1.1 daß bei dem einen Verbindungselement (1) der Durchmesser (DV3) des vorderen Bereichs (V3) des zylinderförmigen Dorns (3) wesentlich kleiner ist als der Durchmesser (D4) der zylinderförmigen Ausnehmung (4) des anderen Verbindungselements (2), während der Durchmesser (DH3) des hinteren Bereichs (H3) des zylinderförmigen Dorns (3) etwa dem Durchmesser (D4) der zylinderförmigen Ausnehmung (4) entspricht,
1.2 daß zwischen dem vorderen Bereich (V3) und dem hinteren Bereich (H3) des Dorns (3) ein konusartiges Zwischenstück (Z3) vorgesehen ist,
1.3 daß das vordere Ende (V3') des Dorns (3) konusartig verjüngt ausgebildet ist,
1.4 daß in der zylinderförmigen Ausnehmung (4) ein Ring (5) vorgesehen ist, dessen Außendurchmesser etwa dem Durchmesser (D4) der zylinderförmigen Ausnehmung (4) und dessen Innendurchmesser (D5) etwa dem Durchmesser (DV3) des vorderen Bereichs (V3) des zylinderförmigen Dorns (3) entspricht,
1.5 daß der Abstand (A) des Ringes (5) von der Vorderkante des mit der Ausnehmung (4) versehenen Verbindungselementes (2) so gewählt ist, daß der Ring (5) nach Beendigung des Kupplungsvorgangs den vorderen Bereich (V3) des zylinderförmigen Dorns (3) des anderen Verbindungselementes (1) umschließt.

2. Kupplung nach Anspruch 1, dadurch gekennzeichnet, daß der Ring (5) an seiner inneren Umfangsfläche (5) - im Querschnitt gesehen - stufenförmig ausgebildet ist, wobei die kleinere Stufe zum vorderen Ende des Verbindungselementes (2) gerichtet ist.

3. Kupplung nach Anspruch 1, dadurch gekennzeichnet, daß der Ring (5) an seiner inneren Umfangsfläche (5) - im Querschnitt gesehen - ballig ausgebildet ist.

4. Kupplung nach Anspruch 1, dadurch gekennzeichnet, daß der Ring (5) - im Querschnitt gesehen - an seiner inneren Umfangsfläche (5) kegelförmig ausgebildet ist.

5. Kupplung nach einem der Ansprüche 1 bis 4, dadurch gekennzeichnet, daß das konusartige Zwischenstück (Z3) des Dorns (3) und/oder dessen konusartig verjüngtes vorderes Ende (V3') durch mit dem Dorn (3) verbundene Hülsen (6, 7) gebildet sind/ist.

6. Kupplung nach einem der Ansprüche 1 bis 5, dadurch gekennzeichnet, daß das konusartige Zwischenstück (Z3) des Dorns (3) und/oder dessen konusartig verjüngtes vorderes Ende (V3') mit axial verlaufenden Einfräsungen (8, 9) versehen sind/ist.

7. Kupplung nach einem der Ansprüche 1 bis 6, dadurch gekennzeichnet, daß die Stirnfläche des mit dem Dorn (3) versehenen Verbindungselementes (1) mit axial verlaufenden Einfräsungen (10) versehen ist.

8. Kupplung nach einem der Ansprüche 1 bis 7, dadurch gekennzeichnet, daß das mit dem Dorn (3) versehene Verbindungselement (1) als Rohr ausgebildet ist.

9. Kupplung nach einem der Ansprüche 1 bis 8, dadurch gekennzeichnet, daß beide Verbindungselemente (1, 2) eine radial verlaufende Bohrung (11, 12) aufweisen, die so angeordnet sind, daß sie nach Beendigung des Kupplungsvorgangs miteinander fluchten.

## Claims

1. A coupling formed by two inter-engageable connecting members (1, 2) for connecting bar-shaped parts, wherein the one connecting member is provided with a projection (3) of cylindrical cross-section, and the other connecting member is provided with a cylindrical recess (4), characterised in that
1.1 in the case of the one connecting member (1), the diameter (DV3) of the front region (V3) of the cylindrical projection (3) is substantially smaller than the diameter (D4) of the cylindrical recess (4) in the other connecting member (2), while the diameter (DH3) of the rear region (H3) of the cylindrical projection (3) corresponds substantially to the diameter (D4) of the cylindrical recess (4),
1.2 in that a cone-shaped intermediate piece (Z3) is provided between the front region (V3) and the rear region (H3) of the projection (3),
1.3 in that the front end (V3') of the projection (3) is conically tapered,
1.4 in that a ring (5) is provided in the cylindrical recess (4), the outer diameter of the ring (5) corresponding substantially to the diameter (D4) of the cylindrical recess (4), and its inner diameter (D5) corresponding substantially to the diameter (DV3) of the front region (V3) of the cylindrical projection (3),
1.5 in that the distance (A) between the ring (5) and the front edge of the connecting member (2) provided with the recess (4) is selected so that the ring (5) surrounds the front region (V3) of the cylindrical projection (3) of the other connecting member (1) on completion of the coupling process.

2. A coupling according to claim 1, characterised in that the inner circumferential surface of the ring (5) is stepped when viewed in cross-section, the smaller step facing the front end of the connecting member (2).

3. A coupling according to claim 1, characterised in that the inner circumferential surface of the ring (5) is cambered when viewed in cross-section.

4. A coupling according to claim 1, characterised in that the inner circumferential surface of the ring (5) is conical when viewed in cross-section.

5. A coupling according to any one of claims 1 to 4, characterised in that the cone-shaped intermediate piece (Z3) of the projection (3) and/or its conically tapered front end (V3') is/are formed by sleeves (6, 7) connected to the projection (3).

6. A coupling according to any one of claims 1 to 5, characterised in that the cone-shaped intermediate piece (Z3) of the projection (3) and/or its conically tapered front end (V3') is/are provided with axially extending milled grooves (8, 9).

7. A coupling according to any one of claims 1 to 6, characterised in that the end surface of the connecting member (1) provided with the projection (3) is provided with axially extending milled grooves (10).

8. A coupling according to any one of claims 1 to 7, characterised in that the connecting member (1) provided with the projection (3) is formed as a pipe.

9. A coupling according to any one of claims 1 to 8, characterised in that both connecting members (1, 2) have radially extending bores (11, 12) arranged so as to be in mutual alignment on completion of the coupling process.

## Revendications

1. Accouplement formé par deux éléments de liaison (1, 2) pouvant être enfichés l'un dans l'autre pour l'établissement de la liaison de pièces en forme tiges, un élément de liaison étant pourvu d'une broche (3) de forme cylindrique en coupe transversale et l'autre élément de liaison étant pourvu d'un évidement de forme cylindrique (4), caractérisé en ce
1.1 que dans le cas d'un élément de liaison (1), le diamètre (DV3) de la partie avant (V3) de la broche de forme cylindrique (3) est nettement plus petit que le diamètre (D4) de l'évidement de forme cylindrique (4) de l'autre élément de liaison (2), tandis que le diamètre (DH3) de la partie arrière (H3) de la broche de forme cylindrique (3) correspond approximativement au diamètre (D4) de l'évidement de forme cylindrique (4),
1.2 qu'entre la partie avant (V3) et la partie arrière (H3) de la broche (3) est prévue une pièce intercalaire de forme conique,
1.3 que l'extrémité avant (V3') de la broche (3) est réalisée avec une forme rétrécie conique,
1.4 que dans l'évidement de forme cylindrique (1) il est prévu un anneau (5), dont le diamètre extérieur correspond approximativement au diamètre (D4) de l'élément de forme cylindre (4) et dont le diamètre intérieur (D5) correspond approximativement au diamètre (DV3) de la partie avant (V3) de la broche de forme cylindrique (3),
1.5 que la distance (A) entre l'anneau (5) et le bord avant de l'élément de liaison (2) pourvu de l'évidement (4) est choisi de manière qu'à la fin de l'opération d'accouplement, l'anneau (5) transfère la partie avant (V3) de la broche de forme cylindrique (3) de l'autre élément de liaison (1).

2. Accouplement selon la revendication 1, caractérisé en ce que l'anneau (5) est agencé avec une forme étagée - lorsqu'on regarde en coupe transversale - au niveau de sa surface circonférentielle intérieure (5), la partie étagée la plus petite étant dirigée vers l'extrémité avant de l'élément de liaison (2).

3. Accouplement selon la revendication 1, caractérisé en ce que l'anneau (5) est agencé avec une forme bombée - selon une vue en coupe transversale - au niveau de sa surface circonférentielle intérieure (5).

4. Accouplement selon la revendication 1, caractérisé en ce que l'anneau (5) est agencé avec une forme conique - selon une vue en coupe transversale - au niveau de sa surface circonférentielle intérieure (5).

5. Accouplement selon l'une des revendications 1 à 4, caractérisé en ce que l'élément intercalaire de forme conique (3) de la broche (3) et/ou son extrémité avant rétrécie de forme conique (V3') sont/est formée(s) par des douilles (6,7) reliées à la broche (3).

6. Accouplement selon l'une des revendications 1 à 5, caractérisé en ce que la pièce intercalaire de forme conique (Z3) de la broche (3) et/ou son extrémité avant rétrécie de forme conique (V3') sont/est pourvue(s) de fraisages axiaux (8,9).

7. Accouplement selon l'une des revendications 1 à 6, caractérisé en ce que la surface frontale de l'élément de liaison (1) équipée de la broche (3) est pourvue de fraisages axiaux (10).

8. Accouplement selon l'une des revendications 1 à 7, caractérisé en ce que l'élément de liaison (1) relié à la broche (3) est agencé sous la forme d'un tube.

9. Accouplement selon l'une des revendications 1 à 8, caractérisé en ce que les deux éléments de liaison (1,2) possèdent des perçages radiaux respectifs (11,12) qui sont disposés de telle sorte qu'ils sont alignés entre eux à la fin de l'opération d'accouplement.
